# FASCICULE DE BREVET EUROPEEN

(11) **EP 4 210 948 B1**
(45) Date de publication et mention de la délivrance du brevet: **21.05.2025**
(21) Numéro de dépôt: 21773623.0
(22) Date de dépôt: 14.09.2021
(51) Int. Cl.: B32B 33/00, B32B 19/04, E04C 2/52

(54) **PANNEAU POUR CONDUITS DE CLIMATISATION**
PLATTE FÜR KLIMAKANÄLE
PANEL FOR AIR-CONDITIONING DUCTS

(30) Priorité: 14.09.2020 FR 2009279
(43) Date de publication de la demande: 19.07.2023
(73) Titulaire: SAINT-GOBAIN ISOVER, 92400 Courbevoie (FR)
(72) Inventeur: PEREZ, Maria Luisa, 28002 MADRID (ES); DIEZ, Alfonso, 28002 MADRID (ES); RICO, Mariano, 28002 MADRID (ES); LOPEZ, Gregorio, 28002 MADRID (ES)
(74) Mandataire: Saint-Gobain Recherche
(86) Numéro de dépôt international: PCT/EP2021/075168
(87) Numéro de publication internationale: WO 2022/053700

(56) Documents cités:
- EP-A1- 0 772 009
- WO-A1-2011/023807
- WO-A1-2018/109375
- WO-A2-2004/072393
- FR-A1- 2 740 804
- FR-A1- 2 993 200
- FR-A1- 3 012 363
- FR-A1- 3 074 091

## Description

La présente invention concerne un panneau pour conduits d'air, plus précisément pour former des conduits destinés à la distribution d'air conditionné.

La présente invention se rapporte tout particulièrement aux conduits obtenus à partir de tels panneaux. Tout particulièrement, la présente invention se rapporte au domaine des conduits appelés dans le domaine « autoportants », car leurs caractéristiques mécaniques de rigidité ne sont pas apportées par un tube ou une gaine interne métallique mais par une âme de fibres minérales de forte densité. De tels conduits sont donc dépourvus d'une telle gaine métallique.

À l'heure actuelle, les conduits prévus pour la distribution d'air conditionné exposés aux intempéries sont constitués à partir d'éléments tubulaires prismatiques modulaires, le plus souvent fabriqués en tôle, qu'on fixe convenablement l'un à l'autre et qui ne sortent pas isolés d'usine, de sorte que ceux-ci doivent être gainés d'un matériau d'isolation thermique lors d'opérations ultérieures, avec la répercussion négative consécutive que cela suppose au niveau des coûts.

À ce genre de problème il faut ajouter le fait que ce type de "modules" est extrêmement volumineux, avec les problèmes consécutifs que cela implique du point de vue du transport et du stockage.

Il est connu que la conduction d'un flux d'air dans une installation de transport d'air conditionné disposé en intérieur (c'est-à-dire dans un milieu préservé des conditions climatiques extérieures) peut également s'effectuer à l'aide de conduits formés à partir d'une structure rigide fabriquée avec des panneaux isolants, de préférence en laine de verre ou de roche ou plus rarement en un autre matériau fibreux similaire, successivement accouplés le long de trajets de longueurs parfois appréciables jusqu'à l'espace final à conditionner. Une telle structure est par exemple décrite dans les demandes EP1532391A1 ou EP1592853A1 auxquelles on se réfèrera pour plus de précisions sur une telle mise en œuvre.

Actuellement, la plupart des conduites autoportantes d'air conditionné sont fabriquées et assemblées tel que décrit dans les publications précédentes à partir de panneaux revêtus par un revêtement extérieur (c'est-à-dire sur la face du panneau destiné à être positionné vers l'extérieur dans la conduite finale). Ce revêtement a pour but de garantir un produit fini résistant aux agressions extérieures aussi bien mécaniques que chimiques mais également de proposer un produit fini plaisant esthétiquement. Actuellement, la plupart des revêtements extérieurs utilisent comme couche de finition la plus externe une couche en aluminium, qui peut éventuellement être recouvert d'un film plastique transparent anti-UV, notamment pour une utilisation en extérieur.

La couche en aluminium généralement utilisée est d'un type classique et elle présente ainsi par nature une réflexion lumineuse globale élevée, ce qui peut poser des problèmes d'éblouissement ou de fatigue visuelle notamment lors de la pause des conduites pour l'opérateur chargé des découpes mais également pour l'intégration des conduites dans son environnement, notamment en cas de variations de la luminosité intérieure de la pièce ou de la salle équipée par ladite conduite ou encore des conditions d'ensoleillement, notamment si la conduite est installée à l'extérieur.

Le but de la présente invention est de résoudre les problèmes précédents en proposant des panneaux adaptés pour faciliter la fabrication de conduites autoportantes ainsi que lesdites conduites autoportantes facilement intégrables dans tout type d'environnement. L'objet de l'invention est plus particulièrement de proposer des panneaux raccordés entre eux selon les techniques déjà décrites, en constituant ainsi des conduits de distribution d'air conditionné, le tout avec un montage facile, rapide, et facile tout en garantissant un produit dont l'esthétique permet une uniformité visuelle de l'installation globale finalement installée, indépendamment de l'éclairage, que ce soit en extérieur ou en intérieur.

Plus particulièrement, la présente invention se rapporte à un panneau pour conduits autoportés, notamment de climatisation, constitué d'une âme de laine minérale ou similaire minérale, recouverte sur sa face externe d'un revêtement extérieur lié à la surface externe de l'âme, ledit revêtement extérieur comprenant une feuille d'aluminium, ladite feuille d'aluminium étant la feuille (visible) la plus externe du revêtement extérieur, ledit panneau étant caractérisé en ce que la feuille d'aluminium présente, au moins sur sa face exposée vers l'extérieur (c'est-à-dire la plus éloignée de ladite âme), une réflexion diffuse de la lumière visible supérieure à sa réflexion spéculaire, et en ce que le paramètre de rugosité Sz de la face de ladite feuille d'aluminium exposée vers l'extérieur, tel que mesuré selon la norme NF ISO 25178, est supérieur à 20 micromètres.

Au sens de la présente invention on entend classiquement par réflexion spéculaire, la partie du rayonnement incident réfléchie par la surface de la feuille d'aluminium dans une seule et même direction, suivant les lois de Descartes, (angle du rayonnement réfléchi symétrique de celui du rayonnement incident par rapport à la normale à la surface).

On entend par réflexion diffuse la partie du rayonnement incident réfléchie dans toutes les directions à cause des hétérogénéités du milieu. Une telle réflexion diffuse est notamment observée lorsque les surfaces sont rugueuses ou rendues rugueuses, et qu'elles présentent des aspérités dont la taille est supérieure à la longueur d'onde du rayonnement incident.

La réflexion totale par la feuille d'aluminium est la somme de la réflexion spéculaire et de la réflexion diffuse.

La réflexion totale, la réflexion spéculaire et la réflexion diffuse de la lumière visible (380 nm - 780 nm) peuvent être mesurés par un dispositif de mesure classique tel qu'un spectromètre, par exemple un spectromètre d'absorption UV-Vis-NIR Perkin Elmer Lambda 900 équipé d'une sphère intégrante. Selon l'invention, l'intégration est donc effectuée sur la totalité de la plage du visible (380 nm-780 nm).

On donne ci-après certains modes de réalisation préférés de la présente invention, qui peuvent bien entendu être combinés entre eux le cas échéant :
- La réflexion diffuse de ladite face exposée vers l'extérieur de la feuille d'aluminium est au moins deux fois supérieure à sa réflexion spéculaire, ou même au moins 3 fois supérieure à sa réflexion spéculaire.
- La réflexion diffuse de ladite face exposée vers l'extérieur de la feuille d'aluminium est supérieure à 50%, et de préférence est supérieure à 60%, voire supérieure à 70%, et de préférence est inférieure à 90%.
- La réflexion spéculaire de ladite face exposée vers l'extérieur de la feuille d'aluminium est inférieure à 30% et de préférence est inférieure à 25%, voire inférieure à 20%.
- Le paramètre de rugosité Sz de la face de la feuille d'aluminium exposée vers l'extérieur, tel que mesuré selon la norme NF ISO 25178, est supérieur à 30 micromètres, voire supérieur à 40 micromètres.
- Le paramètre de rugosité S_{Sk} de la face de la feuille d'aluminium exposée vers l'extérieur, tel que mesuré selon la norme NF ISO 25178 est supérieur à 0,1 et de préférence est supérieur à 0,2, voire supérieur à 0,3 ou même supérieur à 0,4.
- L'autre face de la feuille d'aluminium présente une réflexion spéculaire supérieure à sa réflexion diffuse.
- Alternativement, l'autre face de la feuille d'aluminium peut présenter une réflexion spéculaire inférieure à sa réflexion diffuse.
- L'âme de laine minérale est recouverte sur sa face interne d'un revêtement intérieur lié à la surface interne de l'âme et comprenant une feuille d'aluminium externe, la feuille d'aluminium présentant, sur sa face la plus éloignée de ladite âme, une réflexion diffuse supérieure à sa réflexion spéculaire.
- Le revêtement extérieur est constituée par ladite feuille d'aluminium, de préférence renforcée par une grille de fibres de verre de renforcement.
- Le revêtement extérieur comprend une feuille de papier kraft disposée en dessous de ladite feuille d'aluminium et de préférence collée à l'âme de fibres minérales, ladite feuille d'aluminium étant de préférence renforcée par une grille de fibres de verre de renforcement.
- La surface externe de l'âme centrale comprend en outre un voile de fibres de verre ou de fibres synthétiques, ledit voile étant de préférence lié à l'âme centrale par le liant utilisé pour la réticulation des fibres minérales constituant ladite âme, de sorte que le panneau comprend, à partir de la surface externe de l'âme en laine minérale:
   - ledit voile de fibres de fibres de verre ou de fibres synthétiques,
   - ledit revêtement extérieur.
- Le revêtement extérieur est recouvert par un film protecteur anti-UV, en particulier choisi parmi les résines époxy HRUV (haute résistance aux ultra-violets), les uréthanes, les fluorures de polyvinyle.
- Les panneaux se terminent à leurs extrémités en bords à emboîter.
- Le revêtement du panneau se prolonge en un rabat de sorte qu'en situation d'assemblage avec un autre module il chevauche partiellement le revêtement dudit module (et peut ainsi être scellé avec un ruban éventuellement de la même matière).

L'invention se rapporte également à un conduit autoporté fabriqué à partir de panneaux tels que décrits précédemment et à l'utilisation de tel panneaux pour la fabrication de conduits autoportés, notamment de distribution d'air conditionné.

Selon d'autres modes de réalisations particuliers et préférés (mais non restrictifs) de l'invention, qui peuvent le cas échéant être combinés entre eux :
- L'épaisseur totale du revêtement extérieur est comprise entre 0,005 mm et 1 mm, de préférence encore entre 0,05 mm et 0,50 mm.
- Le revêtement extérieur et/ou le cas échéant le revêtement intérieur est collé à l'âme par une colle en polyuréthane PU, en polyéthylène basse densité (LDPE- Low Density Polyéthylène), les colles thermofusibles (hot-melt) ou les colles à base aqueuse, de préférence en PU ou en LDPE.
- La surface externe de l'âme centrale comprend en outre un voile de fibres de verre ou de fibres synthétiques, ledit voile étant de préférence lié à l'âme centrale par le même liant que celui utilisé pour la réticulation des fibres minérales constituant ladite âme.
- La surface interne de l'âme centrale comprend en outre un voile de fibres de verre ou de fibres synthétiques, ledit voile étant de préférence lié à l'âme centrale par le même liant que celui utilisé pour la réticulation des fibres minérales constituant ladite âme.
- le panneau comprend successivement, à partir de la surface externe de l'âme en laine minérale:
   - un voile de fibres de verre intégré aux fibres minérales constituant l'âme,
   - une couche d'un adhésif, notamment du type de ceux décrits précédemment,
   - un revêtement extérieur comprenant au moins un feuillet d'aluminium, éventuellement renforcé par un papier kraft au moyen d'un adhésif et d'une maille de fibre de verre,
- éventuellement un film protecteur constitué d'un film protecteur anti-UV.
- Les panneaux se terminent à leurs extrémités en bords à emboîter

En ce qui concerne les moyens de raccord entre les panneaux obtenus, on a prévu que ceux-ci présentent un profil d'emboîtement, afin d'obtenir un raccord étanche le plus parfait possible. On parvient de cette façon à obtenir à partir de panneaux initialement plans des conduits d'air qui pourront être exposés aux intempéries, qui sont isolés thermiquement et ont un revêtement qui fournit une barrière de vapeur absolue, extrêmement polyvalents, car ils permettent d'obtenir des conduits aux dimensions et géométries très variées à partir d'un même panneau "universel".
- Le revêtement du panneau se prolonge légèrement en un rabat de sorte qu'en situation d'assemblage avec un autre module il chevauche partiellement le revêtement dudit module et est scellé avec un ruban de même matière.
- Le revêtement intérieur qui détermine la face intérieure du conduit se prolonge au-delà du bord du panneau, en se fixant à la surface qui définit le profil de raccordement.
- La densité de l'âme en fibres minérales est comprise entre 50 kg/m³ et 110 kg/m³, de préférence entre 55 kg/m³ et 80 kg/m³.

Un panneau selon l'invention peut par exemple être un panneau pour conduits externes, notamment pour conduits externes de climatisation et produits similaires.

L'invention se rapporte également à un conduit autoporté fabriqué à partir de panneaux tels que décrits précédemment.

Enfin l'invention se rapporte à l'utilisation des panneaux décrits précédemment pour la fabrication de conduits autoportés, notamment de distribution d'air conditionné.

Pour compléter la description précédente de la présente invention et aider à une meilleure compréhension des caractéristiques de celle-ci, un exemple préféré (mais non limitatif) de sa réalisation pratique en est par la suite décrit, en relation avec le jeu de dessins annexé ci-joint, en tant que partie intégrante de ladite description où, à titre illustratif et non limitatif, nous avons représenté ce qui suit :
La figure 1 montre une représentation sous forme de perspective d'un panneau à partir duquel on obtient un module pour constituer des conduits externes de climatisation, tout cela réalisé conformément à l'objet de la présente invention.
La figure 2 montre une vue en perspective du raccordement de deux modules contigus au sein d'un conduit autoporté selon l'invention.
La figure 3 représente une vue de détail agrandie d'une première variante de réalisation du raccord représenté sur la Figure 2.
La figure 4 schématise une vue de détail agrandie d'une seconde variante de réalisation du raccord représenté sur la Figure 2.
La figure 5 illustre une vue en éclaté de l'ensemble des éléments constituant le panneau et le conduit selon un mode de réalisation de l'invention.
La figure 6 illustre la méthode utilisée pour mesurer les réflexions selon l'invention.

Comme on peut le voir sur les figures susvisées, le panneau (1-1') selon l'invention est constitué à partir d'une âme (2-2') de laine minérale (laine de verre ou laine de roche) ou similaire, qui sur sa face considérée comme externe est recouverte d'un revêtement extérieur (3-3') lui permettant d'être résistant mécaniquement et chimiquement. Au sens de la présente invention les termes « externe », « extérieur », « interne » et « intérieur » font référence aux positions respectives des différentes composantes du panneau dans la conduite finale, sauf indications contraires.

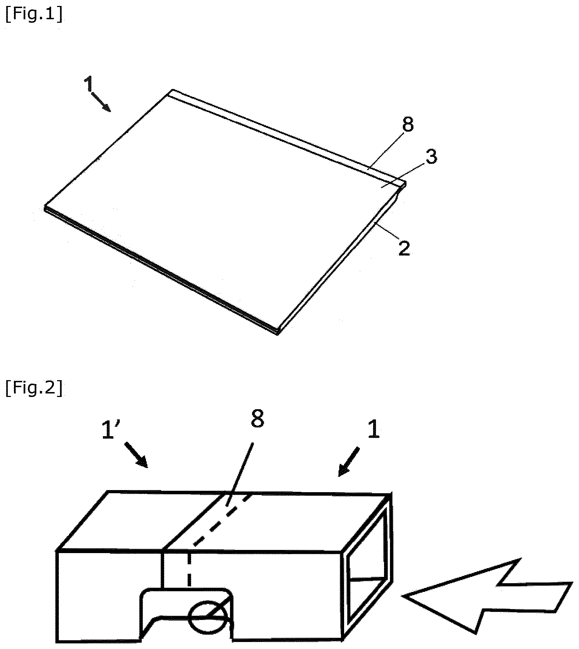

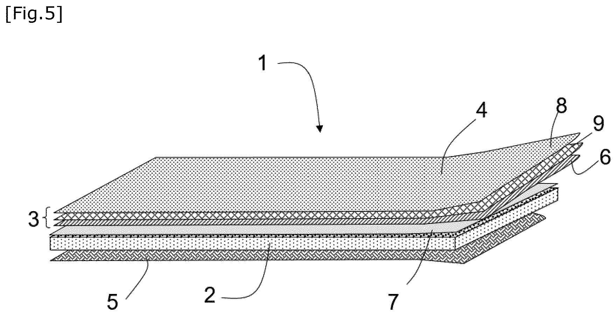

Les figures 1 à 4 décrivent l'assemblage et l'emboitement des panneaux selon l'invention et tels que par exemple illustrés par la figure 5 pour l'obtention de conduites autoportées. À partir de cette structure et avec les outils de coupe et de pliage appropriés, il est possible selon l'invention de former avec un unique type de panneau une multitude de conduits de types, de configurations et de géométries différentes, et cela rapidement et simplement, tel que cela est notamment décrit dans la publication EP 1 532 391 A1.

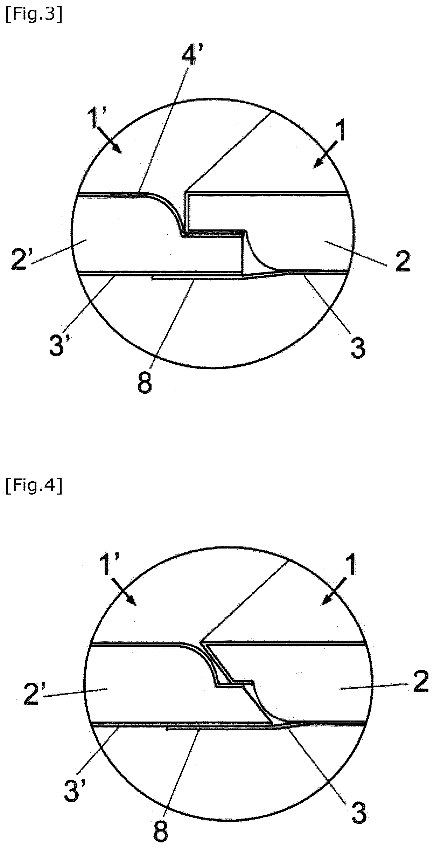

En ce qui concerne le mode de raccordement entre modules au sein des conduits autoportés, il peut être prévu que les panneaux se terminent à leurs extrémités par des bords à emboîter, comme ceux représentés en détail sur les Figures 3 et 4, de façon à ce que de préférence le revêtement extérieur 3 multicouches se prolonge légèrement en un rabat 8 qui chevauche partiellement le revêtement 3' du module contigu, empêchant ainsi l'entrée d'eau/d'humidité. On peut utiliser un ruban de même matière que le revêtement.

Cet emboîtement pourra être droit, comme le montre la figure 3, ou oblique, comme le montre la figure 4, sans que cela affecte l'invention.

Tel que décrit maintenant plus en détail sur la figure 5, selon un mode possible de réalisation, le revêtement extérieur 3 comprend une couche de papier kraft 6 recouverte d'une feuille d'aluminium 4 externe, les deux éléments étant de préférence liés par un adhésif, ladite feuille d'aluminium pouvant en outre être renforcée par une grille de fibres de verre de renforcement 9 (scrim layer selon le terme anglais) pour former un complexe FSK (foil-scrim-kraft).

Selon une autre configuration selon l'invention, les revêtements selon l'invention peuvent être constitués uniquement d'une feuille d'aluminium 4 de préférence renforcée par une grille de fibres, de préférence de verre, de renforcement 9.

L'ensemble peut être protégé contre les rayons ultraviolets par un film supplémentaire connu à cet effet, tel que décrit précédemment (non représenté sur la figure 5)

Sur la face dite interne du conduit (par référence à sa position finale dans le conduit), l'âme centrale est recouverte, d'un tissu de verre 7, ou d'une unique feuille d'aluminium 5, éventuellement renforcée par une grille de renforcement 9, d'un ou d'un combiné papier kraft-feuille d'aluminium.

Eventuellement, un tissu de verre ou un voile de verre 7 peut également être fixé à ladite âme au moyen d'un adhésif (non représenté sur les figures) ou alternativement par le liant unissant les fibres de l'âme minérale pour améliorer encore la teneur mécanique du conduit, sur une face ou les deux faces de ladite âme 2. Sur la figure 5, l'âme centrale 2 en laine minérale est bordée sur sa face extérieure d'un tissu 7 de fibres de verre, notamment un tissu Neto^{®} de la société déposante.

La surface opposée de l'âme centrale 2 peut également être renforcée au moyen d'un autre voile de fibres de verre 7 (non représenté). Selon un mode préféré, le voile ou le tissu de verre 7 est déposé sur la face externe de l'âme lors de la fabrication du matelas dense de fibres minérales, avant le passage dans l'étuve de cuisson du liant. De cette manière, on obtient un voile de renforcement intégré à la surface de l'âme en laine minérale, c'est à dire lié à celle-ci par le même liant unissant les fibres minérales de l'âme, dont l'action de renforcement en est ainsi améliorée.

Un panneau ou un conduit selon l'invention peut bien entendu comprendre d'autres éléments supplémentaires, en particulier des couches et/ou des feuillets additionnels entrant dans la constitution du revêtement extérieur 3.

Sur la face externe de l'âme centrale 2, c'est-à-dire sur la face tournée vers l'extérieur une fois le conduit autoporté fabriqué à partir du panneau, le revêtement extérieur 3 multicouches est positionné et lié à la surface de l'âme, le cas échéant par l'intermédiaire du voile de renforcement 7, via une couche de colle (non représenté). Cette couche de colle est préférentiellement une colle de polyuréthane mais peut également être choisi parmi les colles en polyéthylène basse densité (LDPE- Low Density Polyéthylène), les colles thermofusibles (hot-melt) ou les colles à base aqueuse.

Selon un autre mode de réalisation possible, on peut disposer d'abord, au-dessus de la feuille d'aluminium 4, une couche de matière plastique comme le polyester puis le film protecteur anti-UV, notamment du type de celui décrit précédemment.

Selon une autre configuration non décrite sur la figure 5 mais inclus dans le cadre de la présente invention, le revêtement protecteur peut comprendre plusieurs films d'aluminium, par exemple deux films d'aluminium, séparés les uns des autres par des couches de matière plastique comme le polyester.

Selon l'invention, les couches de matière plastique sont liées directement au film ou aux films d'aluminium ou alternativement par l'intermédiaire de tout adhésif connu dans l'art pour permettre une telle liaison métal-plastique (non représenté sur la figure 5).

De préférence, selon l'invention l'épaisseur totale du revêtement 3 est comprise entre 5 micromètres et 1000 micromètres, de préférence entre 50 micromètres et 500 micromètres, et de manière très préférée, est comprise entre 30 et 250 micromètres.

Selon l'invention, la feuille d'aluminium 4 est configurée pour présenter une réflexion diffuse supérieure, voire très supérieure à la réflexion spéculaire.

Dans le tableau 1 qui suit, on a reporté les valeurs de la réflexion totale, de la réflexion spéculaire et de la réflexion diffuse d'une feuille d'aluminium telle que commercialisée actuellement et d'une feuille d'aluminium configurée selon la présente invention pour en augmenter la réflexion spéculaire (de la lumière visible : entre 380 nm et 780 nm). Les réflexions (en pourcentage de la lumière incidente) ont été mesurées à l'aide d'un spectromètre d'absorption UV-Vis-NIR Perkin Elmer Lambda 900 équipé d'une sphère intégrante de 150 mm pour la la plage du visible (380 nm-780 nm) avec un pas de 5 nm avec un pas d'intégration de 0,26 seconde par pas de mesure. On estime que la précision de la mesure est de ±0,15%. Les réflexions sont mesurées avec un angle incident de 8° (0° étant la normale).

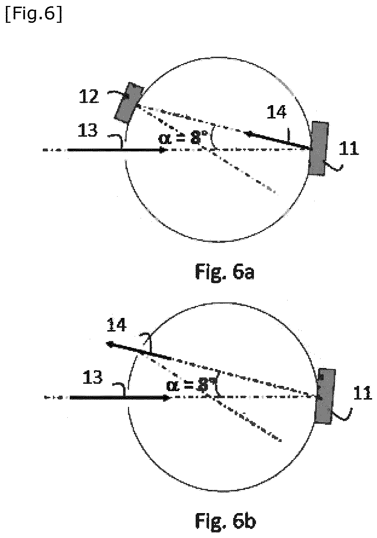

La figure 6 illustre la configuration utilisée pour mesurer la réflexion diffuse et la réflexion totale de la lumière visible. Sur la figure 6, on a représenté schématiquement la sphère intégrante.

La sphère est équipée de deux ports 11 et 12 et d'une ouverture pour introduire dans celle-ci le rayon incident 13.

Pour la mesure de la transmission totale (diffusion + spéculaire) on place l'échantillon sur le port 11 (ou on remplace le port 11 par l'échantillon), le port 12 restant en place (figure 6a). La sphère d'intégration permet ainsi la réflexion totale de la lumière par l'échantillon.

Pour la mesure de la transmission diffuse, on remplace également le port 11 par l'échantillon, mais on retire le port 12 (figure 6b). Le faisceau 14 issu de la réflexion spéculaire sur l'échantillon peut ainsi s'échapper de la sphère sans entrer dans la mesure obtenue par la sphère d'intégration.

La réflexion spéculaire est obtenue par soustraction de la réflexion diffuse à la réflexion totale.

**[Tableau 1]**

| | Réflexion totale R_{T}* | Réflexion diffuse R_{D} | Réflexion spéculaire R_{S} |
|---|---|---|---|
| Feuille aluminium selon l'invention | 92 | 76 | 16 |
| Feuille aluminium commerciale | 90 | 28 | 62 |

| | | | |
|---|---|---|---|
| * R_{T}= R_{D}+ R_{S} | | | |

Les caractéristiques de rugosité des deux feuilles d'aluminium ont été mesurées à l'aide d'un profilomètre selon la norme NF ISO 25178.

Plus précisément, les mesures de topographie ont été réalisées en utilisant un profilomètre STIL comprenant un capteur optique sans contact (capteur confocal chromatique). Les points de mesure ont été acquis sur une grille carrée avec un espacement de 1 µm. Les images ont été acquises sur une surface de 5mm x 2,5 mm en évitant les lignes de topographie imprimées, puis analysées en utilisant le logiciel MountainsMap Scanning Topography 7.4 de DigitalSurf. Les surfaces ont été redressés avec un plan et les paramètres de rugosité finalement calculés selon la norme NF ISO 25178.

Les valeurs du paramètre Sz (qui mesure la distance maximale entre un pic et un creux) et du paramètre SSk (qui mesure l'asymétrie (Skewness) de la surface étudiée) sont reportées dans le tableau 2 ci-dessous :

**[Tableau 2]**

| | Sz (micromètres) | SSk |
|---|---|---|
| Feuille aluminium commerciale | 17 | 0,06 |
| Feuille aluminium selon l'invention | 48 | 0,43 |

Il a été vérifié ensuite que l'utilisation d'un revêtement aluminium dont les caractéristiques répondent à la présente invention présente les avantages suivants:
- pour l'installateur, en réduisant la réflexion de la lumière et en évitant les réflexions dangereuses et inconfortables sans exposition directe à la lumière provenant de la surface du revêtement du panneau utilisé. En évitant au maximum la réflexion spéculaire au profit d'une réflexion diffuse, on améliore le confort visuel et une fatigue visuelle de l'installateur ou un éblouissement. La sécurité de l'installation est ainsi améliorée.

En outre, un tel travail en environnement sécurisé peut être garanti quelle que soit la zone de travail, en particulier en tout lieu (extérieur ou intérieur), et quels que soient le type d'éclairage (naturel ou artificiel) et son intensité. Il permet en particulier de travailler à l'extérieur les jours ensoleillés, sans reflets intenses et en minimisant la réflexion de la lumière et la chaleur.

Il permet également d'améliorer l'efficacité du travail réalisé, par exemple en garantissant une plus grande précision dans la découpe, notamment si des lignes de guidage sont présentes à la surface du panneau à découper comme décrit dans la publication WO2004/001277, en améliorant notamment le contraste entre lesdites lignes de découpe et la surface du revêtement aluminium extérieur. Une efficacité du travail de pose est également obtenue lors de la découpe, en facilitant des figures de conduits aussi bien sur la face interne si celle-ci est également recouverte d'un feuille d'aluminium selon l'invention de réflexion diffuse supérieure à la réflexion spéculaire, notamment des coupes longitudinales que sur la face externe des panneaux, pour l'assemblage des figures.

L'utilisation d'une feuille d'aluminium selon l'invention dans le revêtement externe permet également d'améliorer l'esthétique de l'installation finale car elle contribue à l'uniformité visuelle de l'installation globale indépendamment de l'éclairage (extérieur ou intérieur) et de son intensité.

## Revendications

1. Panneau (1) pour conduits autoportés, notamment de climatisation, constitué d'une âme (2) de laine minérale, recouverte sur sa face externe d'un revêtement extérieur (3) lié à la surface externe de l'âme, ledit revêtement extérieur (3) comprenant une feuille d'aluminium (4) et ladite feuille d'aluminium étant la feuille la plus externe du revêtement extérieur, ledit panneau étant **caractérisé en ce que** ladite feuille d'aluminium (4) présente, au moins sur sa face exposée vers l'extérieur, une réflexion diffuse de la lumière visible supérieure à sa réflexion spéculaire, et **en ce que** le paramètre de rugosité Sz de la face de ladite feuille d'aluminium exposée vers l'extérieur, tel que mesuré selon la norme NF ISO 25178, est supérieur à 20 micromètres.

2. Panneau selon la revendication 1, dans lequel la réflexion diffuse de ladite face exposée vers l'extérieur de la feuille d'aluminium est au moins deux fois supérieure à sa réflexion spéculaire.

3. Panneau selon l'une des revendications précédentes, dans lequel la réflexion diffuse de ladite face exposée vers l'extérieur de la feuille d'aluminium est supérieure à 50%, et de préférence est supérieure à 60%, voire supérieure à 70%, et de préférence inférieure à 90%.

4. Panneau selon l'une des revendications précédentes, dans lequel la réflexion spéculaire de ladite face exposée vers l'extérieur de la feuille d'aluminium est inférieure à 30% et de préférence est inférieure à 25%, voire inférieure à 20%.

5. Panneau selon l'une des revendications précédentes, dans lequel le paramètre de rugosité Sz de la face de ladite feuille d'aluminium exposée vers l'extérieur, tel que mesuré selon la norme NF ISO 25178, est supérieur à 30 micromètres, voire supérieur à 40 micromètres.

6. Panneau selon l'une des revendications précédentes, dans lequel le paramètre de rugosité SSk de la face de ladite feuille d'aluminium exposée vers l'extérieur, tel que mesuré selon la norme NF ISO 25178 est supérieur à 0,1 et de préférence est supérieur à 0,2, voire supérieur à 0,3 ou même supérieur à 0,4.

7. Panneau selon l'une des revendications précédentes, dans lequel l'autre face de la feuille d'aluminium présente une réflexion spéculaire supérieure à sa réflexion diffuse.

8. Panneau selon l'une des revendications 1 à 6, dans lequel l'autre face de la feuille d'aluminium présente une réflexion spéculaire inférieure à sa réflexion diffuse.

9. Panneau selon l'une des revendications précédentes, dans lequel l'âme (2) de laine minérale est recouverte sur sa face interne d'un revêtement intérieur (5) lié à la surface interne de l'âme et comprenant une feuille d'aluminium externe, la feuille d'aluminium présentant, sur sa face la plus éloignée de ladite âme, une réflexion diffuse supérieure à sa réflexion spéculaire.

10. Panneau selon l'une des revendications précédentes, dans lequel le revêtement extérieur est constituée par ladite feuille d'aluminium, de préférence renforcée par une grille de fibres de verre de renforcement (9).

11. Panneau selon l'une des revendications 1 à 9, dans lequel ledit revêtement extérieur comprend une feuille de papier kraft disposée en dessous de ladite feuille d'aluminium et de préférence collée à l'âme de fibres minérales, ladite feuille d'aluminium étant de préférence renforcée par une grille de fibres de verre de renforcement (9).

12. Panneau selon l'une des revendications précédentes, dans lequel la surface externe de l'âme centrale (2) comprend en outre un voile (7) de fibres de verre ou de fibres synthétiques, ledit voile (7) étant de préférence lié à l'âme centrale (2) par le liant utilisé pour la réticulation des fibres minérales constituant ladite âme, de sorte que le panneau comprend, à partir de la surface externe de l'âme en laine minérale:
- ledit voile (7) de fibres de fibres de verre ou de fibres synthétiques,
- ledit revêtement extérieur (3).

13. Panneau selon l'une des revendications précédentes, **caractérisé en ce que** le revêtement extérieur est recouvert par un film protecteur anti-UV, en particulier choisi parmi les résines époxy HRUV (haute résistance aux ultra-violets), les uréthanes, les fluorures de polyvinyle.

14. Panneau selon l'une des revendications précédentes, **caractérisé en ce que** les panneaux se terminent à leurs extrémités en bords à emboîter.

15. Panneau selon l'une des revendications précédentes, **caractérisé en ce que** le revêtement du panneau se prolonge en un rabat de sorte qu'en situation d'assemblage avec un autre module il chevauche partiellement le revêtement dudit module.

16. Conduit autoporté fabriqué à partir de panneaux selon l'une des revendications précédentes.

17. Utilisation de panneaux selon l'une des revendications 1 à 15 pour la fabrication de conduits autoportés, notamment de distribution d'air conditionné.

## Patentansprüche

1. Platte (1) für selbsttragende Leitungen, insbesondere für Klimaanlagen, bestehend aus einem Kern (2) aus Mineralwolle, der auf seiner Außenfläche mit einer Außenbeschichtung (3) bedeckt ist, die mit der Außenoberfläche des Kerns verbunden ist, die Außenbeschichtung (3) umfassend ein Aluminiumblech (4), und wobei das Aluminiumblech das äußerste Blech der Außenbeschichtung ist, die Platte **dadurch gekennzeichnet ist, dass** das Aluminiumblech (4) mindestens auf seiner nach außen gewandten Fläche eine diffuse Reflexion von sichtbarem Licht aufweist, die größer als seine spiegelnde Reflexion ist, und dass der Rauheitsparameter Sz der nach außen gewandten Seite des Aluminiumblechs, gemessen gemäß der Norm NF ISO 25178, größer als 20 Mikrometer ist.

2. Platte nach Anspruch 1, wobei die diffuse Reflexion der nach außen gewandten freiliegenden Fläche des Aluminiumblechs mindestens zweimal größer als ihre spiegelnde Reflexion ist.

3. Platte nach einem der vorstehenden Ansprüche, wobei die diffuse Reflexion der nach außen gewandten freiliegenden Fläche des Aluminiumblechs größer als 50 % und vorzugsweise größer als 60 % oder sogar größer als 70 % und vorzugsweise kleiner als 90 % ist.

4. Platte nach einem der vorstehenden Ansprüche, wobei die spiegelnde Reflexion der nach außen gewandten freiliegenden Fläche des Aluminiumblechs kleiner als 30 % und vorzugsweise kleiner als 25 % oder sogar kleiner als 20 % ist.

5. Platte nach einem der vorstehenden Ansprüche, wobei der Rauheitsparameter Sz der nach außen gewandten freiliegenden Fläche des Aluminiumblechs, gemessen gemäß der Norm NF ISO 25178, größer als 30 Mikrometer oder sogar größer als 40 Mikrometer ist.

6. Platte nach einem der vorstehenden Ansprüche, wobei der Rauheitsparameter SSk der nach außen gewandten freiliegenden Fläche des Aluminiumblechs, gemessen gemäß der Norm NF ISO 25178, größer als 0,1 und vorzugsweise größer als 0,2 oder sogar größer als 0,3 oder sogar größer als 0,4 ist.

7. Platte nach einem der vorstehenden Ansprüche, wobei die andere Fläche des Aluminiumblechs eine spiegelnde Reflexion aufweist, die größer als ihre diffuse Reflexion ist.

8. Platte nach einem der Ansprüche 1 bis 6, wobei die andere Fläche des Aluminiumblechs eine kleinere spiegelnde Reflexion als ihre diffuse Reflexion aufweist.

9. Platte nach einem der vorstehenden Ansprüche, wobei der Kern (2) aus Mineralwolle auf seiner Innenfläche mit einer Innenbeschichtung (5) bedeckt ist, die mit der Innenoberfläche des Kerns verbunden ist und ein Außenaluminiumblech umfasst, wobei das Aluminiumblech auf seiner von dem Kern am weitesten entfernten Fläche eine diffuse Reflexion aufweist, die größer als ihre spiegelnde Reflexion ist.

10. Platte nach einem der vorstehenden Ansprüche, wobei die Außenbeschichtung aus dem Aluminiumblech besteht, das vorzugsweise durch ein Gitter aus verstärkenden Glasfasern (9) verstärkt ist.

11. Platte nach einem der Ansprüche 1 bis 9, wobei die äußere Beschichtung aus einem Kraftpapierblatt besteht, das unter dem Aluminiumblech angeordnet und vorzugsweise mit dem Kern aus Mineralfasern verklebt ist, wobei das Aluminiumblech vorzugsweise durch ein Gitter aus verstärkenden Glasfasern (9) verstärkt ist.

12. Platte nach einem der vorstehenden Ansprüche, wobei die Außenoberfläche des zentralen Kerns (2) ferner eine Abdeckung (7) aus Glasfasern oder synthetischen Fasern umfasst, wobei die Abdeckung (7)
vorzugsweise mit dem zentralen Kern (2) durch das Bindemittel verbunden ist, das für eine Vernetzung der Mineralfasern, aus denen der Kern besteht, verwendet wird, sodass die Platte, von der Außenoberfläche des Mineralwollekerns, umfasst:
- die Faserabdeckung (7) aus Glasfasern oder synthetischen Fasern,
- die Außenbeschichtung (3).

13. Platte nach einem der vorstehenden Ansprüche,
**dadurch gekennzeichnet, dass** die Außenbeschichtung durch eine UV-Schutzfolie bedeckt ist, die besonders aus HRUV-Epoxidharzen (hohe Beständigkeit gegen ultraviolette Strahlen), Urethanen, Polyvinylfluoriden ausgewählt ist.

14. Platte nach einem der vorstehenden Ansprüche,
**dadurch gekennzeichnet, dass** die Platten an ihren Enden mit ineinandergreifenden Kanten abschließen.

15. Platte nach einem der vorstehenden Ansprüche,
**dadurch gekennzeichnet, dass** die Plattenbeschichtung in eine Klappe übergeht, so dass sie bei einer Montage mit einem anderen Modul die Beschichtung des Moduls teilweise überlappt.

16. Selbsttragende Leitung aus Platten nach einem der vorstehenden Ansprüche.

17. Verwendung von Platten nach einem der Ansprüche 1 bis 15 für die Herstellung von selbsttragenden Leitungen, insbesondere für die Verteilung von klimatisierter Luft.

## Claims

1. A panel (1) for self-supporting ducts, in particular air-conditioning ducts, made up of a mineral wool core (2), covered on its external face with an exterior covering (3) joined to the external surface of the core, said exterior covering (3) comprising a sheet of aluminum (4) and said sheet of aluminum being the outermost sheet of the exterior covering, said panel being **characterized in that** said sheet of aluminum (4) has, at least on its outwardly exposed face, a diffuse reflection greater than its specular reflection and **in that** the roughness parameter Sz of the outwardly exposed face of the sheet of aluminum, as measured according to the NF ISO 25178 standard, is greater than 20 micrometers.

2. The panel according to claim 1, wherein the diffuse reflection of said outwardly exposed face of the sheet of aluminum is at least twice as great as its specular reflection.

3. The panel according to one of the preceding claims, wherein the diffuse reflection of said outwardly exposed face of the sheet of aluminum is greater than 50%, and preferably is greater than 60%, or even greater than 70%, and preferably less than 90%.

4. The panel according to one of the preceding claims, wherein the specular reflection of said outwardly exposed face of the sheet of aluminum is less than 30%, and preferably is less than 25%, or even less than 20%.

5. The panel according to one of the preceding claims, wherein the roughness parameter Sz of the outwardly exposed face of the sheet of aluminum is greater than 30 micrometers, or even greater than 40 micrometers.

6. The panel according to one of the preceding claims, wherein the roughness parameter SSk of the outwardly exposed face of the sheet of aluminum, as measured according to the NF ISO 25178 standard, is greater than 0.1 and preferably is greater than 0.2, or even greater than 0.3 or better still greater than 0.4.

7. The panel according to one of the preceding claims, wherein the other face of the sheet of aluminum has a specular reflection greater than its diffuse reflection.

8. The panel according to one of the claims 1 to 6, wherein the other face of the sheet of aluminum has a specular reflection less than its diffuse reflection.

9. The panel according to one of the preceding claims, wherein the mineral wool core (2) is covered on its interior face (5) with an inner covering connected to the interior surface of the core and comprising an exterior sheet of aluminum, the sheet of aluminum having, on its face furthest from said core, a diffuse reflection greater than its specular reflection.

10. The panel according to any of the preceding claims, wherein the exterior covering consists of said sheet of aluminum, preferably reinforced by a mesh of reinforcing glass fibers (9).

11. The panel according to one of the claims 1 to 9, wherein said exterior covering comprises a sheet of kraft paper arranged below said sheet of aluminum and preferably adhesively bonded to the core of mineral fibers, said sheet of aluminum preferably being reinforced by a mesh of reinforcing glass fibers (9).

12. The panel according to any of the preceding claims, wherein the outer surface of the central core (2) further comprises a mat (7) of fiberglass or synthetic fibers, said mat (7) preferably being bonded to the central core (2) by the binder used for the crosslinking of the mineral fibers constituting said core, so that the panel comprises, from the external surface of the mineral wool core:
- said mat (7) of fibers of fiberglass or of synthetic fibers,
- said exterior covering (3).

13. The panel according to any of the preceding claims, **characterized in that** the exterior covering is covered with an anti-UV protective film, in particular chosen from the HRUV (highly resistant to ultraviolet) epoxy resins, urethanes, polyvinyl fluorides.

14. The panel according to one of the preceding claims, **characterized in that** the panels terminate at their ends in edges to be interconnected.

15. The panel according to one of the preceding claims, **characterized in that** the covering of the panel is extended into a flap so that, in an assembly situation with another module, it partially overlaps the covering of said module.

16. A self-supporting duct manufactured from panels according to one of the preceding claims.

17. Use of panels according to one of claims 1 to 15 for the manufacture of self-supporting ducts, in particular for distributing air conditioning.
